# EUROPEAN PATENT APPLICATION

(11) **EP 4 772 929 A1**
(43) Date of publication of application: **08.07.2026**
(21) Application number: 24857591.2
(22) Date of filing: 10.01.2024
(51) Int. Cl.: G02B 27/01

(54) **NEAR-EYE OPTICAL SYSTEM AND HEAD-MOUNTED DISPLAY DEVICE**

(30) Priority: 31.08.2023 CN 202311120552
(71) Applicant: Goertek Optical Technology Co., Ltd., Weifang, Shandong 261031 (CN)
(72) Inventor: SHI, Chaiyuan, Weifang, Shandong 261031 (CN); LIU, Benhua, Weifang, Shandong 261031 (CN); ZHAO, Bogang, Weifang, Shandong 261031 (CN); XU, Yongjiao, Weifang, Shandong 261031 (CN); XU, Yuyang, Weifang, Shandong 261031 (CN)
(74) Representative: Rau, Schneck & Hübner Patentanwälte Rechtsanwälte PartGmbB
(86) International application number: PCT/CN2024/071623
(87) International publication number: WO 2025/044033

(57) **Abstract**

A near-eye optical system and a head-mounted display device. The near-eye optical system comprises a lens barrel (9) and a first optical element provided in the lens barrel (9). The first optical element comprises at least a first lens (5), a polarization-reflection element (10), a phase retarder (11) and a light splitting element (12), one surface of the first lens (5) being circularly provided with a light shielding element (7). The lens barrel (9) comprises a first bearing section (91), a second bearing section (92), and a transition section (93) connected between the first bearing section (91) and the second bearing section (92); the first optical element is arranged at the first bearing section (91); and the transition section (93) forms a target included angle θ₁ with respect to the optical axis of the near-eye optical system, wherein θ₁<90°. The near-eye optical system satisfies tan(θ₁)*(T₁-L₁+L₅)≤50, where T₁ is the total optical length of the near-eye optical system, L₁ is the distance between a point A and the center point O of the surface on the side of the first lens (5) provided with the light shielding element (7), the point A is an orthographic projection point of a connection point of the transition section (93) and the second bearing section (92) on the optical axis of the near-eye display system, and L₅ is the length of the transition section (93).

## Description

### TECHNICAL FIELD

The embodiments of the application relate to the field of optical display technologies, and specifically to a near-eye optical system and a head-mounted display device.

### BACKGROUND

In existing VR optical solutions, the angle of field of view of the optical system is generally positively correlated with the volume of the optical system; that is, the larger the angle of field of view of the optical system, the larger the volume of the optical system. In the design of VR products, the larger angle of field of view often compromises the compactness of the optical system, resulting in a larger optical system volume, and thus affecting the volume of the VR products. This is contrary to the current trend toward miniaturization and lightweight design in virtual reality optical product solutions.

### SUMMARY

An objective of the present application is to provide new technical solutions for a near-eye optical system and a head-mounted display device, which enable a compact design of the near-eye optical system under a large field of view.

In a first aspect, a near-eye optical system is provided by the present application. The near-eye optical system comprises a lens barrel and a first optical element provided within the lens barrel;
the first optical element comprises at least a first lens, a polarization-reflection element, a phase retarder, and a light splitting element, with a light-shielding element arranged annularly on one surface of the first lens;
the lens barrel comprises a first bearing section, a second bearing section, and a transition section connecting the first bearing section and the second bearing section; the first optical element is provided within the first bearing section, and the transition section forms a target angle θ₁ with respect to an optical axis of the near-eye optical system, wherein θ₁<90°;
the near-eye optical system satisfies: tan(θ₁)*(T₁-L₁+L₅)≤50, wherein T₁ is a total optical length of the near-eye optical system, L₁ is a distance from a surface center point O of the first lens on a side provided with the light-shielding element to point A, the point A is an orthogonal projection onto the optical axis of the near-eye display system of the connection point between the transition section and the second bearing section, and L₅ is a length of the transition section.

Optionally, the light-shielding element is a light-shielding ring, and an inner edge of the light-shielding element has a first sharp-angle structure;
the first sharp-angle structure has an angle of θ₂, and abs(θ₂)≥5°.

Optionally, the near-eye optical system comprises a display, which is connected via a bracket to an end of the second bearing section that is away from the transition section;
the light-shielding element is located in an edge region on a surface of the first lens that is away from the display.

Optionally, the bracket comprises a body section and an extension section connected to the body section;
wherein the extension section is connected to the second bearing section, the body section forms a set angle θ₃ with the optical axis, and θ₃<90°;
the display is provided at an end of the body section that is away from the extension section.

Optionally, the near-eye optical system further comprises a second optical element, which is provided within the second bearing section of the lens barrel and located on the same optical axis as the first optical element;
the second optical element comprises at least one lens.

Optionally, the second optical element comprises at least a third lens;
the extension section of the bracket is arranged annularly in an edge region on a surface of the third lens close to the display;
a second extension section is formed at a connection point between the transition section and the second bearing section, and the second extension section is arranged annularly in an edge region on a surface of the third lens that is away from the display.

Optionally, the display is configured to emit natural light or circularly polarized light;
in a case where the light emitted by the display is natural light, a composite film is provided on a light-emitting surface of the display, and the composite film comprises two phase retardation plates and a polarizer provided between the two phase retardation plates, and is capable of converting natural light into circularly polarized light.

Optionally, the light splitting element is provided on a surface of the first lens close to the display;
the phase retarder and the polarization-reflection element are stacked on the surface of the first lens that is away from the display.

Optionally, the first optical element further comprises a polarization element, the polarization element is stacked with the polarization-reflection element and the phase retarder to form a laminated element, with the polarization-reflection element being located between the polarization element and the phase retarder.

Optionally, the first optical element further comprises a second lens, which is provided on a side of the first lens opposite to the side where the light-shielding element is provided;
a spacer element is provided between the first lens and the second lens, and abuts between an edge region of the first lens and an edge region of the second lens.

Optionally, a first extension section is formed at the position of connection point B between the transition section and the first bearing section, and the first extension section is arranged annularly in an edge region on a surface of the second lens close to the display.

Optionally, the near-eye optical system satisfies: (L₂+L₄) / L₃ ≥ 5, where L₂ is thickness of the edge region of the first lens, L_{4.}is thickness of the edge region of the second lens, and L₃ is thickness of the spacer element.

Optionally, the spacer element has a ring structure, and an inner edge of the spacer element is provided with a second sharp-angle structure;
the second sharp-angle structure has an angle of θ₄, and abs(θ₄)≥5°.

Optionally, when the thickness L₃ of the spacer element is ≤0.1 mm, the spacer element is an opaque Mylar sheet.

Optionally, the display is configured to emit natural light or circularly polarized light;
in a case where the light emitted by the display is natural light, a composite film is provided on a surface of the third lens away from the display, and the composite film comprises two phase retardation plates and a polarizer provided between the two phase retardation plates, and is capable of converting natural light into circularly polarized light.

Optionally, the light splitting element is provided on the surface of the second lens close to the display;
the phase retarder and the polarization-reflection element are stacked on the surface of the first lens close to the display.

Optionally, the first optical element further comprises a polarization element, the polarization element is stacked with the polarization-reflection element and the phase retarder to form a laminated element, and the polarization-reflection element is located between the polarization element and the phase retarder.

In a second aspect, a head-mounted display device is provided by the present application. The head-mounted display device comprises:
a housing; and
the near-eye optical system according to the first aspect.

The present application has the following beneficial effects:

The near-eye optical system provided in the embodiments of the present application adopts an optical architecture based on a folded optical path. By appropriately constraining the optical parameters and adding the light-shielding element to shield stray light, a virtual reality solution with a large field of view and small volume is realized under the new optical architecture, while also ensuring better imaging quality. The near-eye optical system provided in the embodiment of the present application exhibits superior optical performance.

Other features and advantages of the present application will become apparent from the following detailed description of exemplary embodiments of the present application with reference to the accompanying drawings.

### BRIEF DESCRIPTION OF THE DRAWINGS

The accompanying drawings, which are incorporated in the description and constitute a part of the description, illustrate embodiments of the present application and, together with the description thereof, serve to explain the principles of the present application.
Figure 1 is a first structural schematic diagram of a near-eye optical system provided in the embodiment of the present application;
Figure 2 is a spot diagram of the near-eye optical system provided in Figure 1;
Figure 3 is the modulation transfer function (MTF) plot of the near-eye optical system provided in Figure 1;
Figure 4 is the field curvature and distortion diagram of the near-eye optical system provided in Figure 1;
Figure 5 is the lateral chromatic aberration diagram of the near-eye optical system provided in Figure 1;
Figure 6 is a second structural schematic diagram of the near-eye optical system provided in the embodiment of the present application;
Figure 7 is a schematic diagram of an embodiment in which an optical element that forms a folded optical path is introduced into the near-eye optical system;
Figure 8 is a schematic diagram of an embodiment in which a laminated element is introduced into the near-eye optical system;
Figure 9 is a first schematic diagram of a partial structure of a lens barrel provided in the embodiment of the present application;
Figure 10 is a schematic diagram of a partial structure of a first optical element provided in the embodiment of the present application;
Figure 11 is a second schematic diagram of a partial structure of the lens barrel provided in the embodiment of the present application;
Figure 12 is a spot diagram of the near-eye optical system provided in Figure 6;
Figure 13 is the modulation transfer function (MTF) plot of the near-eye optical system provided in Figure 6;
Figure 14 is the field curvature and distortion diagram of the near-eye optical system provided in Figure 6;
Figure 15 is the lateral chromatic aberration diagram of the near-eye optical system provided in Figure 6;
Figure 16 is a third structural schematic diagram of the near-eye optical system provided in the embodiment of the present application;
Figure 17 is a spot diagram of the near-eye optical system provided in Figure 16;
Figure 18 is the modulation transfer function (MTF) plot of the near-eye optical system provided in Figure 16;
Figure 19 is the field curvature and distortion diagram of the near-eye optical system provided in Figure 16;
Figure 20 is the lateral chromatic aberration diagram of the near-eye optical system provided in Figure 16;
Figure 21 is a fourth structural schematic diagram of the near-eye optical system provided in the embodiment of the present application;
Figure 22 is a spot diagram of the near-eye optical system provided in Figure 21;
Figure 23 is the modulation transfer function (MTF) plot of the near-eye optical system provided in Figure 21;
Figure 24 is the field curvature and distortion diagram of the near-eye optical system provided in Figure 21;
Figure 25 is the lateral chromatic aberration diagram of the near-eye optical system provided in Figure 21.

### Description of reference signs:

1. Display; 2. Bracket; 21. Body section; 22. Extension section; 3. Third lens; 31. Fifth surface; 32. Sixth surface; 4. Second lens; 41. Third surface; 42. Fourth surface; 5. First lens; 51. First surface; 52. Second surface; 6. Human eye; 7. Light-shielding element; 71. First sharp-angle structure; 8. Spacer element; 9. Lens barrel; 91. First bearing section; 92. Second bearing section; 93. Transition section; 94. First extension section; 95. Second extension section; 10. Polarization-reflection element; 11. Phase retarder; 12. Light splitting element; 13. Polarization element; 14. First anti-reflective coating; 15. Phase retardation plate; 16. Polarizer; 17. Second anti-reflective coating; 18. Screen protection element.

### DETAILED DESCRIPTION

Various exemplary embodiments of the present application will now be described in detail with reference to the accompanying drawings. It should be noted that, unless otherwise specifically stated, the relative arrangement, numerical expressions, and values of the components and steps described in these embodiments do not limit the scope of the present application.

Description to at least one exemplary embodiment is for illustrative purpose only, and in no way implies any restriction on the present disclosure or application or use thereof.

Techniques and devices known to those skilled in the prior art may not be discussed in detail; however, such techniques and devices shall be regarded as part of the description where appropriate.

In all the examples illustrated and discussed herein, any specific value shall be interpreted as illustrative rather than restrictive. Therefore, other examples of the exemplary embodiments may have different values.

It is to be noted that similar reference numbers and alphabetical letters represent similar items in the accompanying drawings. In the case that a certain item is identified in a drawing, further reference thereof may be omitted in the subsequent drawings.

The near-eye optical system and head-mounted display device provided in the embodiments of the present application will be described in detail below with reference to the accompanying drawings.

According to an aspect of an embodiment of the present application, a near-eye optical system is provided, which can be used in a virtual reality display device, such as a VR head-mounted display device. Specifically, the VR head-mounted display device includes VR smart glasses or VR smart helmets, etc. The embodiment of the present application does not limit the specific form of the head-mounted display device.

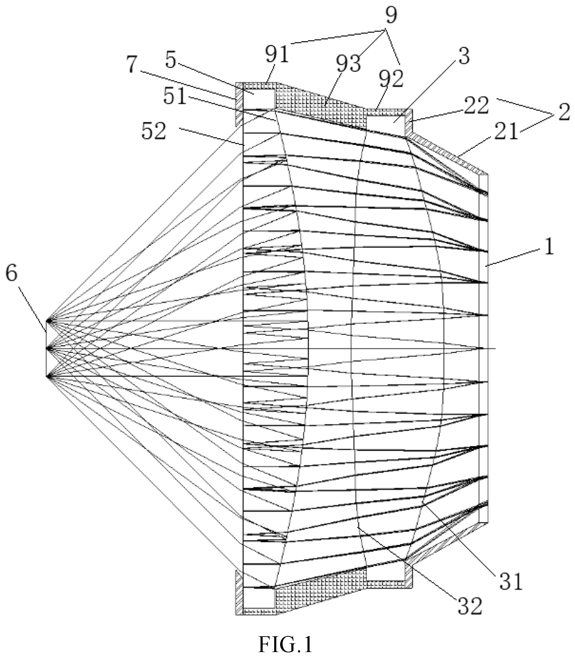

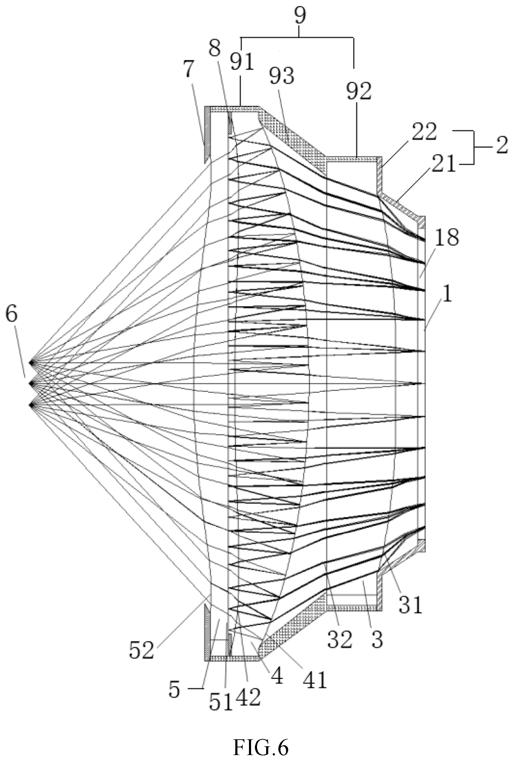

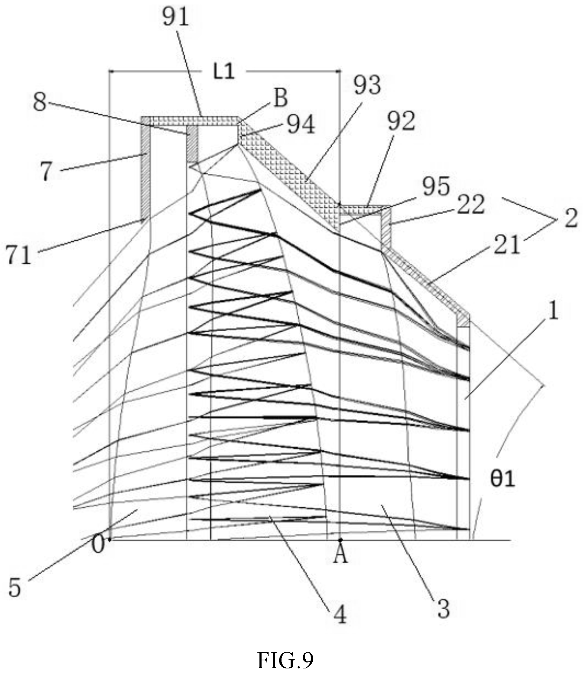

The near-eye optical system proposed in an embodiment of the present application, as shown in Figures 1 and 6, includes a lens barrel 9 and a first optical element provided within the lens barrel 9. Wherein, the first optical element includes at least a first lens 5, a polarization-reflection element 10, a phase retarder 11, and a light splitting element 12. A light-shielding element 7 is arranged annularly on one surface of the first lens 5. The lens barrel 9 includes a first bearing section 91, a second bearing section 92, and a transition section 93 connecting the first bearing section 91 and the second bearing section 92; the first optical element is provided within the first bearing section 91, and the transition section 93 forms a target angle θ₁ with respect to the optical axis of the near-eye optical system, wherein θ₁<90°. The near-eye optical system satisfies: tan(θ₁)*(T₁-L₁+L₅)≤50, wherein T₁ is a total optical length of the near-eye optical system, L₁ is a distance from a surface center point O of the first lens 5 on a side provided with the light-shielding element 7 to point A, the point A is an orthogonal projection onto the optical axis of the near-eye display system of the connection point between the transition section 93 and the second bearing section 92, and L₅ is a length of the transition section 93, as shown in Figure 9.

According to the near-eye optical system provided in the above embodiment, the surface of the first lens 5 on which the light-shielding element 7 is provided can be a plane or a convex surface, as shown in Figures 1 and 6. This surface can be close to the human eye 6.

The near-eye optical system provided according to the above embodiment includes a lens barrel 9, which is used to bear the main optical components within the near-eye optical system. Referring to Figure 9, the lens barrel 9 is not a straight tube structure, but instead includes a section having an inclined wall structure. The introduction of the lens barrel 9 facilitates the assembly of the entire near-eye optical system onto products such as VR devices.

According to the near-eye optical system provided in the above embodiment, a first optical element is provided in the lens barrel 9. The first optical element is configured to receive imaging light emitted from an external device, such as a display 1, and to transmit the light to an imaging position, such as the position of the human eye 6 as shown in Figures 1 and 6, to form an image.

Wherein, the first optical element includes at least one lens, namely the first lens 5 mentioned above, and also includes a plurality of optical elements that form a folded optical path, such as the polarization-reflection element 10, the phase retarder 11 and the light splitting element 12 mentioned above, so that light can be reflected in the first optical element. The design of the folded optical path can reduce the overall optical length of the near-eye optical system while ensuring imaging quality.

According to the near-eye optical system provided in the above embodiment, its optical architecture can be seen in Figures 1 and 6. A light-shielding element 7 is provided on the surface of the first lens 5 close to the human eye 6. Specifically, the light-shielding element 7 is arranged annularly in the edge region of the surface of the first lens 5 close to the human eye 6. The light-shielding element 7 can effectively shield the field of view outside the effective optical field of view and reduce stray light.

As shown in Figure 9, on the basis that the light-shielding element 7 arranged annularly on one surface of the first lens 5, the near-eye optical system should satisfy the constraint that tan(θ₁)*(T₁-L₁+L₅)≤50, wherein T₁ is a total optical length of the near-eye optical system, L₁ is a distance from the center of the convex surface of the first lens 5 to point A, where the point A is an orthogonal projection onto the optical axis of the near-eye display system of the connection point between the transition section 93 and the second bearing section 92, and L₅ is a length of the transition section 93. It should be noted that T₁, L₁ and L₅ are all expressed in millimeters. By constraining the aforementioned parameters of the near-eye optical system in the present application, the overall volume of the near-eye optical system can be effectively reduced.

Specifically, compared with traditional folded optical path solutions, the near-eye optical system provided in the embodiments of the present application has a significantly reduced volume, for example, the volume can be reduced by more than 1/5 relative to traditional optical solutions.

The near-eye optical system provided in the embodiments of the present application adopts an optical architecture based on a folded optical path. By appropriately constraining the optical parameters and adding the light-shielding element 7 to shield stray light, a virtual reality solution with a large field of view and small volume is realized under the new optical architecture, while also ensuring better imaging quality. The near-eye optical system provided in the embodiment of the present application exhibits superior imaging performance. The field of view (FOV) of the near-eye optical system provided in the embodiment of the present application can reach over 95 degrees.

The near-eye optical system provided in the above embodiment of the present application has the advantage of small volume, which enables the slim and lightweight design of virtual reality devices (VR devices) using the near-eye optical system. This is more suitable for users to wear and use, improve wearing comfort, and allows prolonged use without causing fatigue.

The near-eye optical system provided in embodiments of the present application adopts a folded optical path optical architecture. For example, in addition to introducing a lens, a light splitting element 12, a phase retarder 11, and a polarization-reflection element 10 are also introduced into the first optical element. These can be used to form a folded optical path in the first optical element, so that the light is reflected back in it, thereby extending the propagation path of the light and facilitating the final clear imaging.

Wherein, the light splitting element 12 is, for example, a transflective film.

It should be noted that the reflectivity and transmittance of the light splitting element 12 can be flexibly adjusted according to specific needs, and no limitation is imposed thereon in the embodiments of the present application.

Wherein, the phase retarder 11 is, for example, a quarter-wave plate.

Of course, the phase retarder 11 mentioned here can also be configured as other phase retardation plates such as half-wave plates as needed.

The phase retarder 11 can be used to convert linearly polarized light into circularly polarized light, or to convert circularly polarized light into linearly polarized light.

Wherein, the polarization-reflection element 10 is, for example, a linear polarizer, which is a polarizing reflector for reflecting horizontal linearly polarized light and transmitting vertical linearly polarized light, or a polarizing reflector for reflecting linearly polarized light at any other specific angle and transmitting linearly polarized light in a direction perpendicular to the angle.

The near-eye optical system provided in the embodiment of the present application is beneficial for realizing a virtual reality optical solution with a large field of view and a small volume.

In some examples of the present application, referring to Figures 9 to 11, the light-shielding element 7 is a light-shielding ring, and the inner edge of the light-shielding element 7 has a first sharp-angle structure 71. The angle of the first shar-angle structure 71 is θ₂, and abs(θ₂)≥5°.

According to the above example, a light-shielding element 7 is arranged annularly on the surface of the first lens 5 close to the human eye 6. The light-shielding element 7 is of a ring structure, and a sharp-angle structure, namely the first sharp-angle structure 71, can be provided on its inner ring. The design of the first sharp-angle structure 71 can make the position of shielding light more accurate, thereby better shielding field of view light outside the effective optical field of view and further reducing stray light.

When the angle θ₂ of the first sharp-angle structure 71 satisfies: abs(θ₂)≥5°, the effect of reducing stray light is better.

In other words, the absolute value of the angle θ₂ of the first sharp-angle structure 71 should be designed to be no less than 5°. It should be noted that the direction of the sharp-angle structure on the light-shielding element 7 can be adjusted.

In some examples of the present application, referring to Figures 1 and 6, the near-eye optical system includes a display 1, which is connected via the bracket 2 to the end of the second bearing section 92 away from the transition section 93. Wherein, the light-shielding element 7 is located in the edge region on the surface of the first lens 5 away from the display 1.

Wherein, the display 1 is capable of emitting light for imaging.

Wherein, a screen protection element 18 may be provided on the light-emitting surface of the display 1, as shown in Figure 6. The screen protection element 18 can effectively protect the display 1.

Wherein, the lens barrel 9 adopts a three-section design, including a first bearing section 91, a transition section 93 and a second bearing section 92 connected in sequence. The first optical element is provided within the first bearing section 91 and the display 1 is provided within the second bearing section 92. In this architecture, the first optical element and the display 1 are provided at opposite ends of the lens barrel 9. Since the size of the first optical element is larger than the size of the display 1, the transition section 93 on the lens barrel 9 forms an inclined state between the first optical element and the display 1. In the optical solution of the embodiment of the present application, by constraining the tilt angle θ₁ of the transition section 93 relative to the optical axis, the total optical length T₁ of the near-eye optical system, the distance L₁ from the vertex of the first lens 5 to the connection position A between the transition section 93 and the second bearing section 92, and the length L₅ of the transition section 93 to satisfy the relationship tan(θ₁)*(T₁-L₁+L₅)≤50 mm. The overall volume of the near-eye optical system can be effectively reduced even under a large field of view, for example, by more than 1/5 compared with conventional solutions.

It should be noted that in the constraint condition tan(θ₁) × (T₁-L₁+L₅) ≤ 50 mm provided by the embodiments of the present application, T₁ representing the total length of the near-eye optical system, may or may not include the length of the display 1.

Wherein, the lens barrel 9 may be composed of the first bearing section 91, the transition section 93 and the second bearing section 92 connected in sequence, and the lens barrel 9 is an integrally formed structure.

In some examples of the present application, referring to Figures 1 and 6, the bracket 2 includes a body section 21 and an extension section 22 connected to the body section 21; wherein, the extension section 22 is connected to the second bearing section 92, and the body section 21 forms a set angle θ₃ with the optical axis, and θ₃<90°. Wherein, the display 1 is located at the end of the body section 21 away from the extension section 22.

According to the above example, the bracket 2 is a connector that connects the display 1 with the lens barrel 9. It is not a straight cylindrical structure, but includes two sections, specifically, a body section 21 and an extension section 22. The extension section 22 is connected to one end of the second bearing section 92 of the lens barrel 9. The extension section 22 can be a straight wall structure to provide some shielding or positioning for the edge region of the lens located therein. Referring to Figures 9 to 11, the body section 21 has a certain tilt angle relative to the optical axis, and its tilt angle can be consistent with the transition section 93 of the lens barrel 9. This design can reduce the volume of the near-eye optical system.

Wherein, the body section 21 and the extension section 22 are connected as a whole to form the bracket 2.

In some examples of the present application, referring to Figure 1, the near-eye optical system further includes a second optical element, which is provided within the second bearing section 92 of the lens barrel 9 and located on the same optical axis as the first optical element; the second optical element includes at least one lens.

According to the near-eye optical system provided in the embodiments of the present application, an optical element can be added on the side close to the display 1, that is, the second optical element in the above example can be provided between the first optical element and the display 1, which can improve the optical performance of the near-eye optical system.

In some examples of the present application, referring to Figure 1, the second optical element includes at least a third lens 3; the extension section 22 of the bracket 2 is arranged annularly in the edge region on the surface of the third lens 3 close to the display 1; a second extension section 95 is formed at the connection point between the transition section 93 and the second bearing section 92, and the second extension section 95 is arranged annularly in the edge region on the surface of the third lens 3 away from the display 1.

According to the above example, after the third lens 3 is provided on the side close to the display 1, the extension section 22 of the bracket 2 can be used to form a certain shielding on the edge region of the surface of the third lens 3 close to the display 1, and the second extension section 95 at the connection position A between the transition section 93 and the second bearing section 92 can form a certain shielding on the edge region of the surface of the third lens 3 away from the display 1. This design may shield field of view light outside the effective optical field of view of the third lens 3, which is beneficial for reducing stray light.

Meanwhile, the extension section 22 and the second extension section 95 can also position and support the third lens 3, facilitating the assembly of the third lens 3 in the lens barrel 9.

In some examples of the present application, the display 1 is configured to emit natural light or circularly polarized light. In a case where the light emitted by the display 1 is natural light, a composite film is provided on a light-emitting surface of the display 1, and the composite film comprises two phase retardation plates 15 and a polarizer 16 provided between the two phase retardation plates 15, and is capable of converting natural light into circularly polarized light.

When only the first lens 5 and the third lens 3 mentioned above are used in the near-eye optical system, the composite film can be arranged on the display 1.

The composite film is used to convert natural light into circularly polarized light. Stray light can be reduced by designing two layers of the phase retardation plates in the composite film. Wherein, the phase retardation plate is, for example, a quarter-wave plate.

Optionally, a second anti-reflective coating 17 may also be introduced into the composite film.

In some examples of the present application, the light splitting element 12 is provided on the surface of the first lens 5 close to the display 1; the phase retarder 11 and the polarization-reflection element 10 are stacked on the surface of the first lens 5 away from the display 1.

In some examples of the present application, the first optical element further comprises a polarization element 13, the polarization element 13 is stacked with the polarization-reflection element 10 and the phase retarder 11 to form a laminated element, with the polarization-reflection element 10 being located between the polarization element 13 and the phase retarder 11.

Wherein, the polarization element 13 is, for example, a linear polarizer (or a polarization plate).

The polarization element 13 has a transmission direction consistent with the transmission direction of the polarization-reflection element 10, and the use of the polarization element 13 can reduce ghost images and stray light.

Optionally, a first anti-reflective coating 14 may be provided on the surface of the phase retarder 11 away from the polarization-reflection element 10.

In some examples of the present application, referring to Figure 6, the first optical element further comprises a second lens 4, which is provided on a side of the first lens 5 opposite to the side where the light-shielding element 7 is provided. A spacer element 8 is provided between the first lens 5 and the second lens 4, and abuts between an edge region of the first lens 5 and an edge region of the second lens 4.

For the near-eye optical system provided in the embodiments of the present application, the number of optical lenses can be increased in the first optical element. For example, referring to Figure 6, a second lens 4 is introduced into the first optical element. In other words, the first optical element may include a first lens 5 and a second lens 4. Wherein, the second lens 4 is closer to the display 1 than the first lens 5 is. The introduction of the second lens 4 helps to reduce the total optical length of the near-eye optical system while improving imaging quality.

When the first lens 5 and the second lens 4 described above are used in the first optical element, the spacer element 8 needs to be introduced between them. Specifically, the spacer element 8 can abut between the edge regions of the two optical lenses, which can effectively shield field of view light outside the effective optical field of view. When the spacer element is used in conjunction with the light-shielding element 7, stray light can be better reduced.

In some examples of the present application, referring to Figure 6, a first extension section 94 is formed at the connection position B between the transition section 93 and the first bearing section 91, and the first extension section 94 is arranged annularly in the edge region on the surface of the second lens 4 close to the display 1.

According to the above example, the first extension section 94 extending from the connection position B between the transition section 93 and the first bearing section 91 can form a certain shielding on the edge region of the surface of the second lens 4 close to the display 1, thereby cooperating with the spacer element 8 to provide shielding.

Meanwhile, the first extension section 94 can provide positioning for the assembly of the second lens 4 within the lens barrel 9, facilitating the installation of the second lens 4.

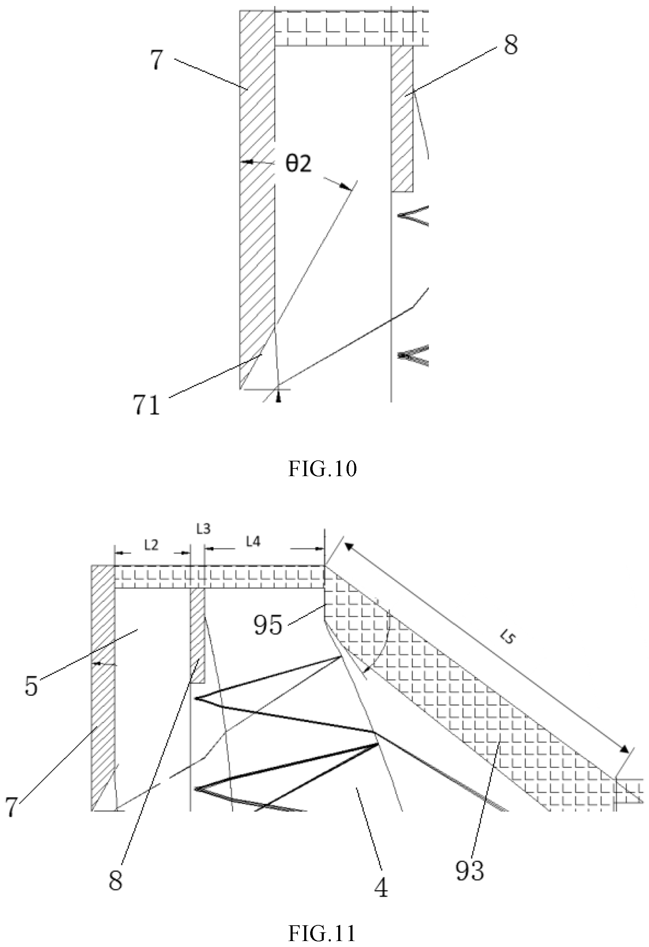

In some examples of the present application, referring to Figure 11, the near-eye optical system satisfies: (L₂+L₄) / L₃ ≥ 5, where L₂ is the thickness of the edge region of the first lens 5, L₄ is the thickness of the edge region of the second lens 4, and L₃ is the thickness of the spacer element 8.

According to the above example, when the near-eye optical system satisfies (L₂+L₄) / L₃ ≥ 5, the assemblability of the second lens 4 and the spacer element 8 can be ensured.

In some examples of the present application, the spacer element 8 has a ring structure, and the inner edge of the spacer element 8 is provided with a second sharp-angle structure; the angle of the second sharp-angle structure is θ₄, and abs(θ₄)≥5°.

The spacer element 8 is a spacer ring provided between two optical lenses. A second sharp-angle structure can be provided on its inner ring to make the position of shielding light more accurate. Wherein, when the angle θ₄ of the second sharp-angle structure satisfies: abs(θ₂)≥5°, the effect of reducing stray light is better.

In some examples of the present application, when the thickness L₃ of the spacer element 8 is ≤0.1mm, the spacer element 8 is an opaque Mylar sheet.

In the near-eye optical system provided in embodiments of the present application, when the spacer element 8 is introduced between the first lens 5 and the second lens 4, the spacer element 8 is limited in thickness during assembly and manufacturing, and should be as thin as possible. The Mylar sheet can be made sufficiently thin, which meets the assembly requirements and optical performance requirements.

Wherein, a black ring Mylar sheet can be used.

In other words, when L₃ is ≤0.1mm, the black Mylar sheet can be used to replace the spacer ring. The black Mylar sheet is has a thin sheet structure and is lighter and thinner.

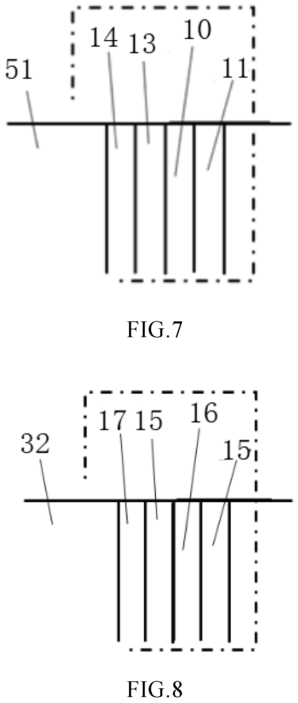

In some examples of the present application, the display 1 is configured to emit natural light or circularly polarized light; in a case where the light emitted by the display 1 is natural light, a composite film is provided on a surface of the third lens 3 away from the display 1, and the composite film comprises two phase retardation plates 15 and a polarizer 16 provided between the two phase retardation plates 15, and as shown in Figure 8, is capable of converting natural light into circularly polarized light.

Based on the above example, the composite film is configured to convert natural light into circularly polarized light. Stray light can be reduced by designing two layers of the phase retardation plates 15 in the composite film material. Wherein, the phase retardation plate is, for example, a quarter-wave plate.

When three lenses are used in the near-eye optical system, as shown in the optical architecture of Figure 6, the composite film can be arranged on the surface of the third lens 3 away from the display 1.

If two lenses are used in the near-eye optical system, as shown in the optical architecture of Figure 1, the composite film can be arranged on the light-emitting surface of the display 1, so that the display 1 can directly emit circularly polarized light.

Optionally, referring to Figure 8, a second anti-reflective coating 17 may also be introduced into the composite film.

In some examples of the present application, the light splitting element 12 is provided on the surface of the second lens 4 close to the display 1; referring to Figure 7, the phase retarder 11 and the polarization-reflection element 10 are stacked on the surface of the first lens 5 close to the display 1.

Wherein, the light splitting element 12 is, for example, a quarter-wave plate, which can be directly attached or coated on the surface (the third surface 41 shown in FIG. 6) of the second lens 4 close to the display 1. The phase retarder 11 and the polarization-reflection element 10 are stacked together, and are provided on the surface (the first surface 51 shown in Figure 6) of the first lens 5 close to the display 1. There is no need to introduce a separate plate support in the optical architecture to support the optical elements described above.

Placing the polarization-reflection element 10 and the phase retarder 11 on the same side of the first lens 5 helps to reduce the difficulty of the assembly process.

Wherein, the polarization-reflection element 10 has a reflection direction that forms an angle of 45° with the fast axis or slow axis of the phase retarder 11.

In some examples of the present application, referring to Figure 7, the first optical element further comprises a polarization element 13, the polarization element 13 is stacked with the polarization-reflection element 10 and the phase retarder 11 to form a laminated element, and the polarization-reflection element 10 is located between the polarization element 13 and the phase retarder 11.

Wherein, the polarization element 13 is, for example, a linear polarizer (or a polarization plate).

The polarization element 13 is has a transmission direction consistent with that of the polarization-reflection element 10, and the use of the polarization element 13 can reduce ghost images and stray light.

Optionally, referring to Figure 7, a first anti-reflective coating 14 may be provided on the surface of the phase retarder 11 away from the polarization-reflection element 10.

It should be noted that the near-eye optical system provided in the embodiment of the present application does not impose a specific limit on the number of optical lenses used, but at least one optical lens, namely the first lens 5, is used. In practical applications, the number of lenses can be designed according to specific needs. Increasing the number of lenses can improve imaging performance and appropriately reduce the overall optical length of the system, but it may increase the weight and production cost of the entire near-eye optical system.

As a preferred embodiment of the present application, the near-eye optical system may use three lenses. At this time, the optical performance of the near-eye optical system is better.

Referring to Figures 6 to 8, the light propagation process of the near-eye optical system is as follows:

Natural light emitted by the display 1 remains natural light after passing through one phase retarder 15 on the surface of the third lens 3. It becomes linearly polarized light after passing through a polarizer 16, and then becomes circularly polarized light after passing through another phase retarder 15. The circularly polarized light is transmitted through the second lens 4, and becomes linearly polarized light (S-light) after passing through a phase retarder 11 on the surface of the first lens 5 which is reflected by the polarization-reflection element 10, and then becomes circularly polarized light after passing through the phase retarder 11 again. The circularly polarized light is reflected by the light splitting element 12 on the surface of the second lens 4, and becomes linearly polarized light (P-light) after passing through the phase retarder 11 on the surface of the first lens 5. Finally, the linearly polarized light is transmitted through the first lens 5 and enters the human eye 6 to form an image.

According to the near-eye optical system provided in the embodiments of the present application, as shown in Figure 6, it may include three lenses, such as a first lens 5, a second lens 4, and a third lens 3 arranged along the same optical axis.

Optionally, the refractive index n of the material used in each optical lens of the near-eye optical system is in the range of 1.4<n<1.7, and the Abbe number v is in the range of 20<v<75.

For example, the refractive index n₁ of the first lens 5 is 1.54, and the Abbe number v₁ is 55.7. The refractive index n₂ of the second lens 4 is 1.54, and the Abbe number v₂ is 56.3. The refractive index n₃ of the third lens 3 is 1.54, and the Abbe number v₃ is 56.3.

Wherein, the center thickness T₁ of the first lens 5 is for example: 1mm≤T₁≤8mm. The focal power φ1 of the first lens 5 is 0<φ1<0.1.

The first lens 5 includes two optical surfaces, namely a first surface 51 close to the display 1 and a second surface 52 away from the display 1.

Both the first surface 51 and the second surface 52 are aspherical surfaces or planar surfaces.

A film structure can be formed on the first surface 51, as shown in Figure 7, including a first anti-reflective coating 14, a polarization element 13 (transmitting P light), a polarization-reflection element 10 (transmitting P light and reflecting S light), and a phase retarder 11. The polarization element 13 can reduce stray light.

In addition, an anti-reflective coating can be optionally provided on the second surface 52.

Wherein, the center thickness T₂ of the second lens 4 is: 1mm≤T₂≤8mm. The focal power φ2 of the second lens 4 is 0 <φ2< 0.1.

The second lens 4 includes two optical surfaces, namely a third surface 41 close to the display 1 and a fourth surface 42 away from the display 1.

The third surface 41 and the fourth surface 42 are aspherical surfaces.

Wherein, a light splitting element 12, i.e., a transflective film, can be provided on the third surface 41.

The fourth surface 42 can be a planar surface or an aspherical surface, and an anti-reflective coating can be selectively provided on the fourth surface 42.

Wherein, the center thickness T₃ of the third lens 3 is: 1mm≤T₃≤8mm. The focal power φ3 of the third lens 3 is 0≤φ3<0.01.

The third lens 3 includes two optical surfaces, namely a fifth surface 31 close to the display 1 and a sixth surface 32 away from the display 1.

The fifth surface 31 and the sixth surface 32 can be aspherical surfaces or planar surfaces.

Wherein, the composite film shown in Figure 8 can be provided on the fifth surface 31, including a second anti-reflective coating 17, two phase retardation plates 15 (quarter-wave plates) and a polarizer 16 located between the two phase retardation plates 15. An anti-reflective coating may also be optionally provided on the sixth surface 32.

The near-eye optical system provided in the embodiment of the present application will be described below through four embodiments.

### First Embodiment

Referring to Figure 1, the near-eye optical system includes a lens barrel 9, and a first optical element, a second optical element, and a display 1 provided within the lens barrel 9 and located on the same optical axis;
the display 1 is capable of emitting natural light, and a composite film is provided on the light-emitting surface of the display 1, and comprises two phase retardation plates 15 and a polarizer 16 provided between the two phase retardation plates 15.
the first optical element includes a first lens 5, a light splitting element 12 is provided on the surface of the first lens 5 close to the display 1, a polarization element 13, a polarization-reflection element 10, and a phase retarder 11 are stacked on the surface of the first lens 5 away from the display 1, and the phase retarder 11 is located between the light splitting element 12 and the polarization-reflection element 10; a light-shielding element 7 is arranged annularly in the edge region of surface of the first lens 5 away from the display 1;
the second optical element includes a third lens 3;
referring to Figures 9 to 11, the lens barrel 9 includes a first bearing section 91, a second bearing section 92, and a transition section 93 connecting the first bearing section 91 and the second bearing section 92; the first optical element is provided within the first bearing section 91, and the transition section 93 forms a target angle θ₁ with respect to the optical axis of the near-eye optical system, wherein θ₁<90°; the second optical element is provided within the second bearing section 92; the display 1 is connected via the bracket 2 to the end of the second bearing section 92 away from the transition section 93;
the bracket 2 includes a body section 21 and an extension section 22 connected to the body section 21; wherein, the extension section 22 is connected to the second bearing section 92, and the body section 21 forms a set angle θ₃ with the optical axis, and θ₃<90°; the extension section 22 of the bracket 2 is arranged annularly in the edge region of the surface of the third lens 3 close to the display 1; a second extension section 95 is formed at the connection position A between the transition section 93 and the second bearing section 92 of the lens barrel 9, and the second extension section 95 is arranged annularly in the edge region of the surface of the third lens 3 away from the display 1.

Table 1 shows the optical parameters of the near-eye optical system, as detailed below.

**Table 1**

| surface | Radius (mm) | Thickness (mm) | Material | Conic | A2 | A4 | A6 | A8 | A10 | A12 |
|---|---|---|---|---|---|---|---|---|---|---|
| 32 | INF | 4.48020 | CALL | 0.0000 | 0.0000 | 0.000E 00 | 0.000 E 00 | 0.00E 00 | 0.00E 00 | 0.00E 00 |
| 31 | -57.0083 | 3.0741 | Air | 3.3913 | 0.0000 | 1.902E -06 | 1.836 E-08 | -4.71E -11 | 5.55E-14 | 2.89E -16 |
| 52 | 69.3275 | 6.7000 | CALL | 0.0000 | 0.0000 | -7.010 E-05 | 2.531 E-07 | 6.30E-10 | -2.79E -12 | 2.53E -18 |
| 51 | -300.7 058 | 2.5000 | Air | 0.0000 | 0.0000 | -2.713 E-04 | 2.418 E-06 | -8.95E -09 | 1.18E-11 | 4.66E -18 |

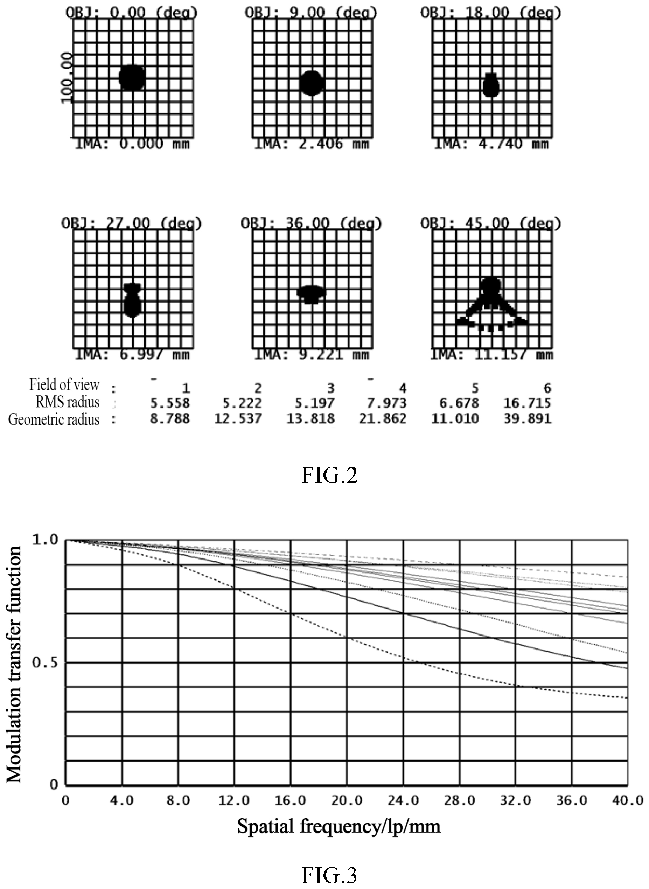

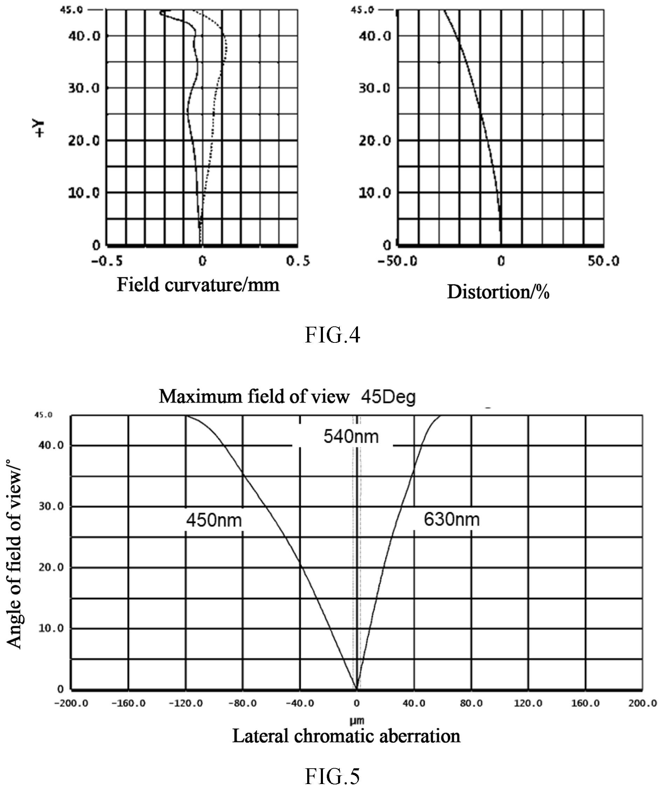

The optical performance of the near-eye optical system provided in the above first embodiment is shown in Figures 2 to 5: Figure 2 is a spot schematic diagram of the near-eye optical system; Figure 3 is the MTF plot of the near-eye optical system; Figure 4 is the field curvature and distortion diagram of the near-eye optical system; and Figure 5 is the lateral chromatic aberration diagram of the near-eye optical system.

The spot diagram refers to a dispersed pattern scattered in a certain range when multiple light rays emitted from one point, after passing through the near-eye optical system, is no longer converge to a single point on the image plane due to aberrations. It can be used to evaluate the imaging quality of the near-eye optical system. As shown in Figure 2, the maximum value of the image point in the spot diagram is less than 17 µm.

The MTF plot is a modulation transfer function plot, which characterizes the imaging sharpness of near-eye optical systems based on the contrast of black and white line pairs. As shown in Figure 3, the central MTF is >0.3 at 40 lp/mm, indicating clear imaging performance.

Referring to Figure 4, the maximum distortion occurs in field of view of 1, with an absolute value of less than 40%.

The lateral chromatic aberration, also known as the magnification chromatic aberration, refers to the difference between the focal positions of blue light and red light on the image plane when a polychromatic principal ray on the object side is transformed into multiple rays on the image side due to the dispersion of the refractive system. As shown in Figure 5, the maximum chromatic aberration of the near-eye optical system is less than 200 µm.

### Second Embodiment

The difference between the second embodiment and the first embodiment described above lies in that a second lens 4 is introduced into the first optical element, and the attaching positions of various optical films are different.

Referring to Figures 6 to 8, the near-eye optical system includes a lens barrel 9, and a first optical element, a second optical element, and a display 1 provided within the lens barrel 9 and located on the same optical axis, and the display 1 is configured to emit natural light;
The first optical element includes a first lens 5 and a second lens 4, a light splitting element 12 is provided on the surface of the second lens 4 close to the display 1, a polarization element 13, a polarization-reflection element 10, and a phase retarder 11 are stacked on the surface of the first lens 5 close to the display 1, and the phase retarder 11 is located between the light splitting element 12 and the polarization-reflection element 10; a light-shielding element 7 is arranged annularly in the edge region of surface of the first lens 5 away from the display 1, a spacer element 8 is provided between the first lens 5 and the second lens 4, and the spacer element 8 abuts between the edge region of the first lens 5 and the edge region of the second lens 4;
the second optical element includes a third lens 3, and a composite film is provided on the surface of the third lens 3 away from the display 1, and includes two phase retardation plates 15 and a polarizer 16 provided between the two phase retardation plates 15;
referring to Figures 9 to 11, the lens barrel 9 comprises a first bearing section 91, a second bearing section 92, and a transition section 93 connecting the first bearing section 91 and the second bearing section 92;
the first optical element is provided within the first bearing section 91, and the transition section 93 forms a target angle θ₁ with respect to an optical axis of the near-eye optical system, wherein θ₁<90°;
the second optical element is provided within the second bearing section 92;
the display 1 is connected via a bracket 2 to the end of the second bearing section 92 away from the transition section 93; the bracket 2 includes a body section 21 and an extension section 22 connected to the body section 21; wherein, the extension section 22 is connected to the second bearing section 92, and the body section 21 forms a set angle θ₃ with the optical axis, and θ₃<90°;
the near-eye optical system satisfies: (L₂+L₄) / L₃ ≥ 5, L₂ is the thickness of the edge region of the first lens, L₄ is the thickness of the edge region of the second lens, and L₃ is the thickness of the spacer element;
the extension section 22 of the bracket 2 is arranged annularly in the edge region of the surface of the third lens 3 close to the display 1; the second extension section 95 is formed at the connection position A between the transition section 93 and the second bearing section 92 of the lens barrel 9, and the second extension section 95 is arranged annularly in the edge region of the surface of the third lens 3 away from the display 1; the first extension section 94 is formed at the connection position B between the transition section 93 and the first bearing section 91, and the first extension section 94 is arranged annularly in the edge region of the surface of the second lens 4 close to the display 1.

Table 2 shows the optical parameters of the near-eye optical system, as detailed below.

**Table 2**

| surface | Radius (mm) | Thickness (mm) | Material | Conic | A2 | A4 | A6 | A8 | A10 | A12 |
|---|---|---|---|---|---|---|---|---|---|---|
| 52 | 72.5147 | 3.2433 | K26 R | 8.432 4 | 0.0 000 | -1.09 8E-0 5 | 2.476 E-08 | -6.78 3E-11 | -9.417 E-14 | -2.72E -19 |
| 51 | Infinity | 0.3000 | Air | 0.000 0 | 0.0 000 | 0.000 E 00 | 0.000 E 00 | 0.000 E 00 | 0.000E 00 | 0.000E 00 |
| 42 | 190.0834 | 7.0015 | CAL L | 9.737 5 | 0.0 000 | -4.76 7E-0 6 | 3.610 E-09 | -1.46 2E-11 | 2.035E -14 | -1.342 E-17 |
| 41 | -78.2898 | 1.2928 | Air | 0.038 | 0.0 | -9.77 | 2.099 | 4.193 | -2.267 | 1.948E |
| | | | | 0 | 000 | 0E-0 7 | E-10 | E-12 | E-14 | -17 |
| 32 | Infinity | 6.5000 | CAL L | 0.0000 | 0.0 000 | 0.000 E 00 | 0.000 E 00 | 0.000 E 00 | 0.000E 00 | 0.000E 00 |
| 31 | 593.0123 | 1.0001 | Air | 9.7504 | 0.0 000 | -7.72 4E-0 5 | 4.207 E-07 | -7.75 5E-1 0 | -1.285 E-12 | 5.849E -15 |

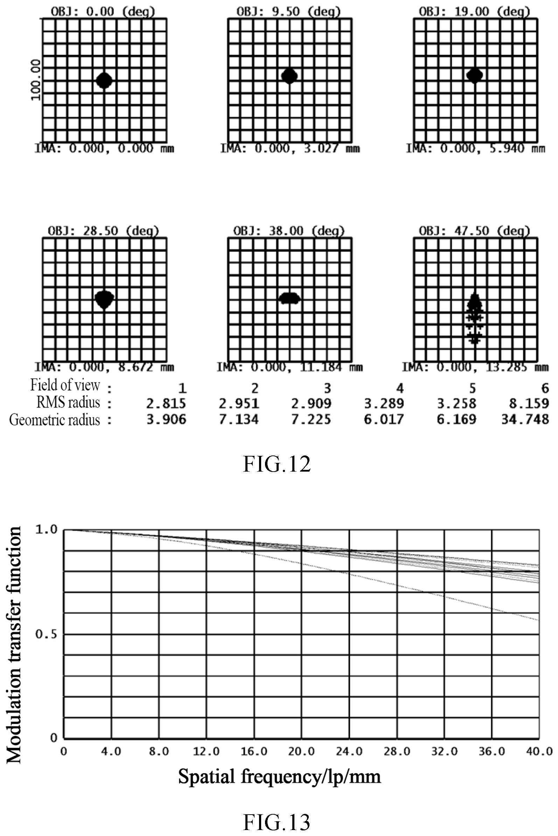

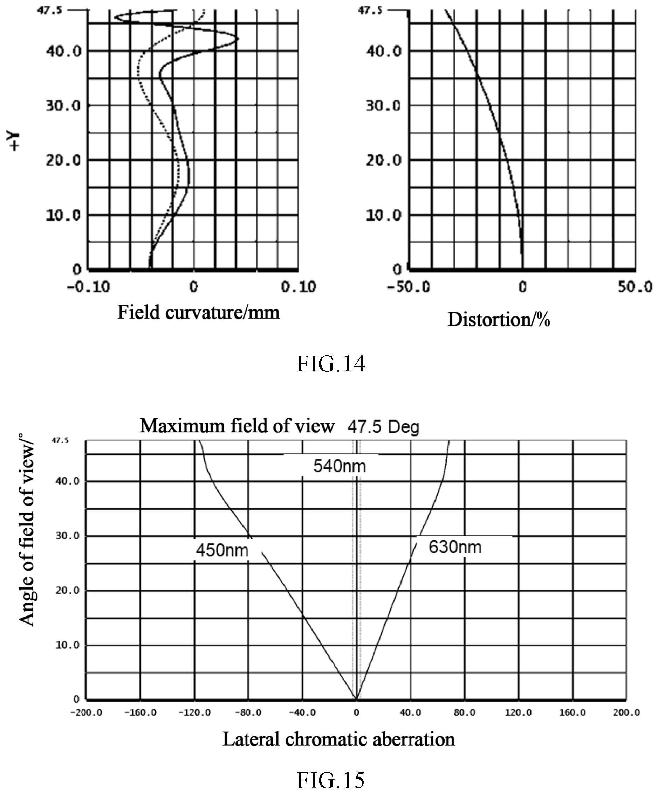

The optical performance of the near-eye optical system provided in the above second embodiment is shown in Figures 12 to 15: Figure 12 is a spot schematic diagram of the near-eye optical system; Figure 13 is the MTF plot of the near-eye optical system; Figure 14 is the field curvature and distortion diagram of the near-eye optical system; and Figure 15 is the lateral chromatic aberration diagram of the near-eye optical system.

The spot diagram refers to a dispersed pattern scattered in a certain range when multiple light rays emitted from one point, after passing through the near-eye optical system, is no longer converge to a single point on the image plane due to aberrations. It can be used to evaluate the imaging quality of the near-eye optical system. As shown in Figure 12, the maximum value of the image point in the spot diagram is less than 9 µm.

The MTF plot is a modulation transfer function plot, which characterizes the imaging sharpness of near-eye optical systems based on the contrast of black and white line pairs. As shown in Figure 13, the central MTF is >0.5 at 40 lp/mm, indicating clear imaging performance.

Referring to Figure 14, the maximum distortion occurs in field of view of 1, with an absolute value of less than 40%.

The lateral chromatic aberration, also known as the magnification chromatic aberration, refers to the difference between the focal positions of blue light and red light on the image plane when a polychromatic principal ray on the object side is transformed into multiple rays on the image side due to the dispersion of the refractive system. As shown in Figure 15, the maximum chromatic aberration of the near-eye optical system is less than 200 µm.

### Third Embodiment

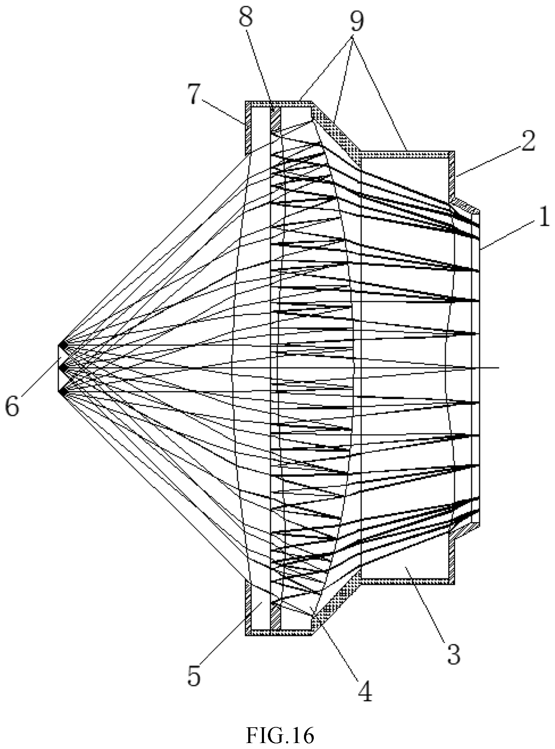

Referring to Figure 16, the near-eye optical system provided in the present third embodiment is shown, which differs from the near-eye optical system shown in the second embodiment in the parameters of the optical elements.

Table 3 shows the optical parameters of the near-eye optical system, as detailed below.

**Table 3**

| surface | Radius (mm) | Thickness (mm) | Material | Conic | A2 | A4 | A6 | A8 | A10 | A12 |
|---|---|---|---|---|---|---|---|---|---|---|
| 52 | 78.4338 | 3.2858 | K26 R | -3.2 980 | 0.0 000 | -1.36 5E-0 5 | 6.710 E-08 | -1.57 6E-1 0 | 3.246 E-14 | 4.358 E-16 |
| 51 | Infinity | 0.3200 | Air | 0.00 00 | 0.0 000 | 0.000 E 00 | 0.000 E 00 | 0.000 E 00 | 0.000 E 00 | 0.000 E 00 |
| 42 | 87.8179 | 6.6000 | CAL L | -4.7 639 | 0.0 000 | -1.10 0E-0 5 | -4.46 8E-0 9 | -3.45 6E-1 2 | 2.657 E-14 | 3.449 E-18 |
| 41 | -85.791 3 | 2.3000 | Air | -0.0 305 | -0.0 126 | -3.94 7E-0 6 | -1.64 1E-0 9 | 8.458 E-12 | -2.89 1E-1 4 | 3.628 E-17 |
| 32 | Infinity | 7.2000 | CAL L | 0.00 00 | 0.0 000 | 0.000 E 00 | 0.000 E 00 | 0.000 E 00 | 0.000 E 00 | 0.000 E 00 |
| 31 | 24.4273 | 1.2000 | Air | 0.00 00 | 0.0 000 | -8.36 8E-0 5 | 8.406 E-08 | 1.769 E-10 | 4.228 E-13 | -1.90 2E-1 5 |

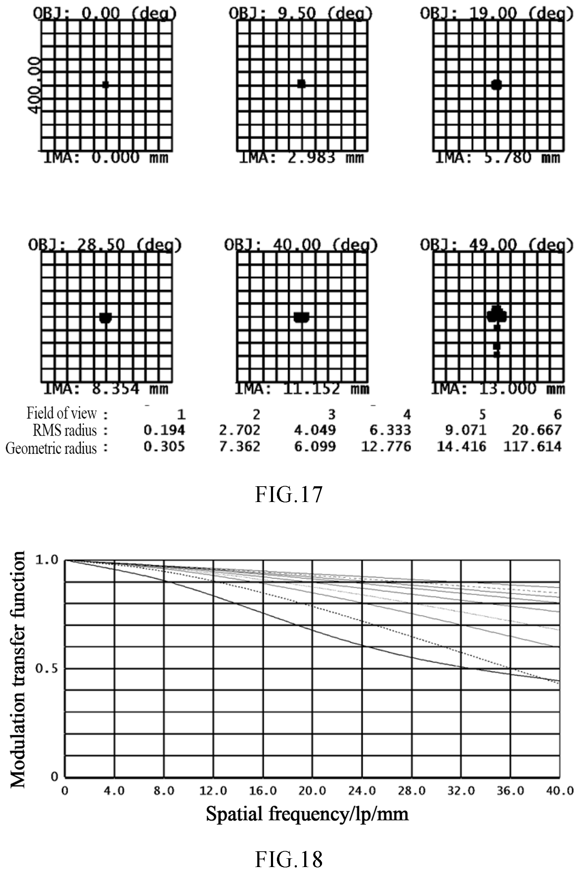

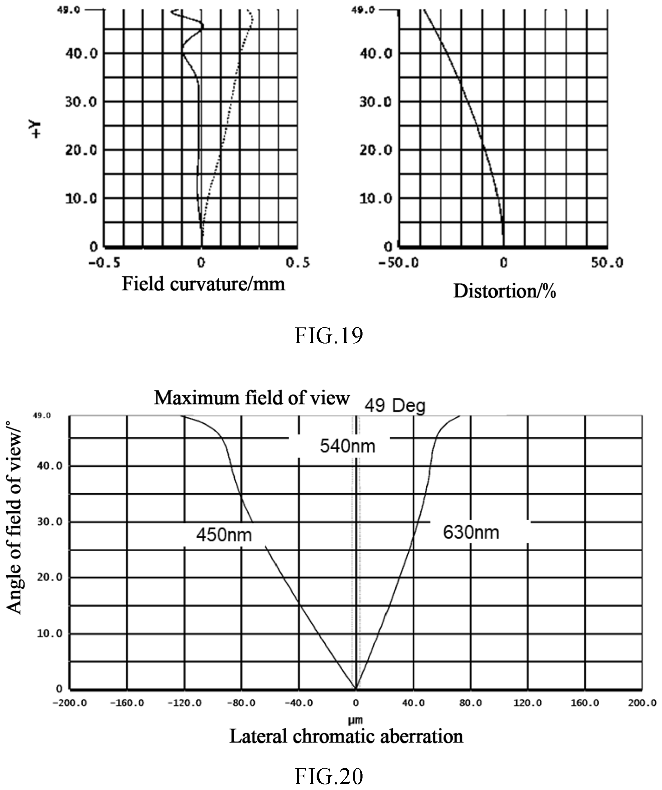

The optical performance of the near-eye optical system provided in the above third embodiment is shown in Figures 17 to 20: Figure 17 is a spot schematic diagram of the near-eye optical system; Figure 18 is the MTF plot of the near-eye optical system; Figure 19 is the field curvature and distortion diagram of the near-eye optical system; and Figure 20 is the lateral chromatic aberration diagram of the near-eye optical system.

The spot diagram refers to a dispersed pattern scattered in a certain range when multiple light rays emitted from one point, after passing through the near-eye optical system, is no longer converge to a single point on the image plane due to aberrations. It can be used to evaluate the imaging quality of the near-eye optical system. As shown in Figure 17, the maximum value of the image point in the spot diagram is less than 21 µm.

The MTF plot is a modulation transfer function plot, which characterizes the imaging sharpness of near-eye optical systems based on the contrast of black and white line pairs. As shown in Figure 18, the central MTF is >0.4 at 40 lp/mm, indicating clear imaging performance.

Referring to Figure 19, the maximum distortion occurs in field of view of 1, with an absolute value of less than 40%.

The lateral chromatic aberration, also known as the magnification chromatic aberration, refers to the difference between the focal positions of blue light and red light on the image plane when a polychromatic principal ray on the object side is transformed into multiple rays on the image side due to the dispersion of the refractive system. As shown in Figure 20, the maximum chromatic aberration of the near-eye optical system is less than 200 µm.

### Fourth Embodiment

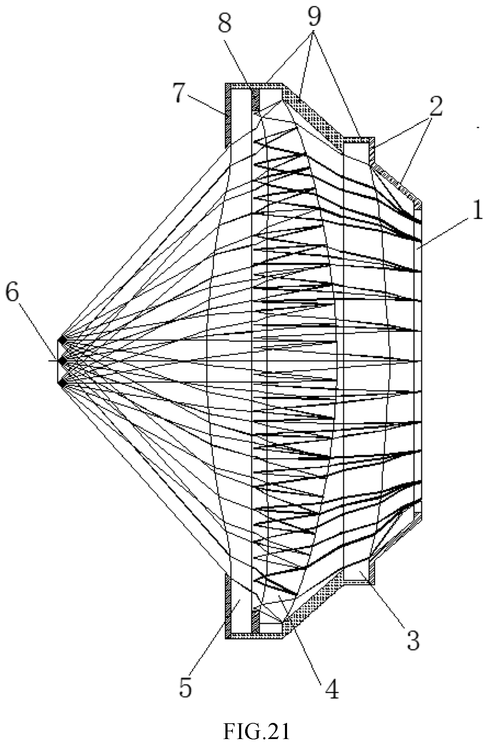

Referring to Figure 21, the near-eye optical system provided in the present fourth embodiment is shown, which differs from the near-eye optical system shown in the second embodiment in the parameters of the optical elements.

Table 4 shows the optical parameters of the near-eye optical system, as detailed below.

**Table 4**

| surface | Radius (mm) | Thickness (mm) | Material | Conic | A2 | A4 | A6 | A8 | A10 | A12 |
|---|---|---|---|---|---|---|---|---|---|---|
| 52 | 63.8786 | 4.3221 | K26R | 3.8142 | 0.0000 | -7.47 8E-0 6 | 5.279 E-08 | -3.41 9E-10 | 1.057 E-12 | -1.74 8E-15 |
| 51 | Infinity | 1.0700 | Air | 0.0000 | 0.000 0 | 0.00 0E 00 | 0.000 E 00 | 0.000 E 00 | 0.000 E 00 | 0.000 E 00 |
| 42 | -504.856 7 | 6.6000 | CAL L | 7.4934 | 0.000 0 | 8.29 2E-0 6 | -3.13 0E-0 9 | -5.56 3E-11 | 9.387 E-14 | -6.55 7E-17 |
| 41 | -61.1531 | 0.3100 | Air | 2.0540 | -0.01 26 | 3.70 5E-0 6 | 4.005 E-09 | -1.02 7E-11 | -3.06 1E-15 | 4.690 E-19 |
| 32 | Infinity | 4.3000 | CAL L | 0.0000 | 0.000 0 | 0.00 0E 00 | 0.000 E 00 | 0.000 E 00 | 0.000 E 00 | 0.000 E 00 |
| 31 | -31.4994 | 1.2000 | Air | -4.262 1 | 0.000 0 | 1.87 5E-0 4 | -1.43 9E-0 6 | 5.236 E-09 | -9.51 5E-12 | 6.862 E-15 |

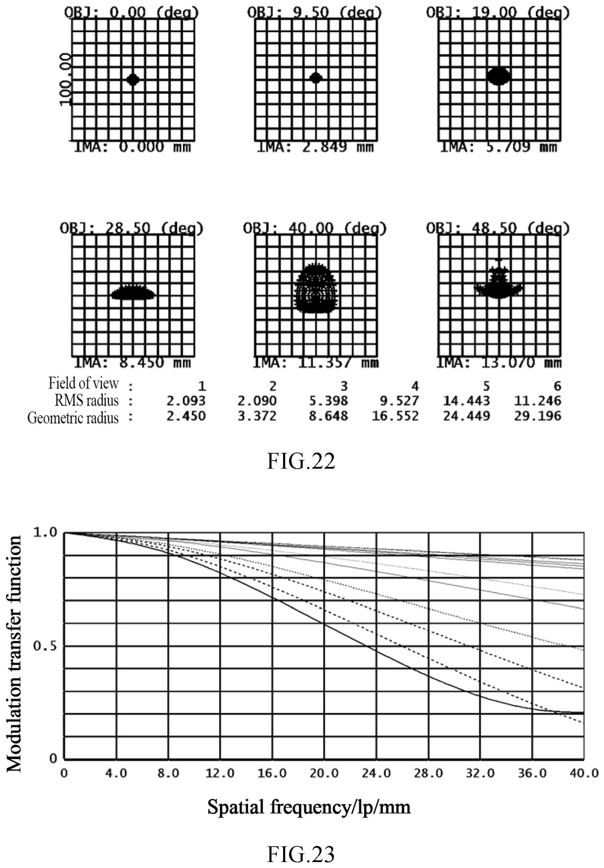

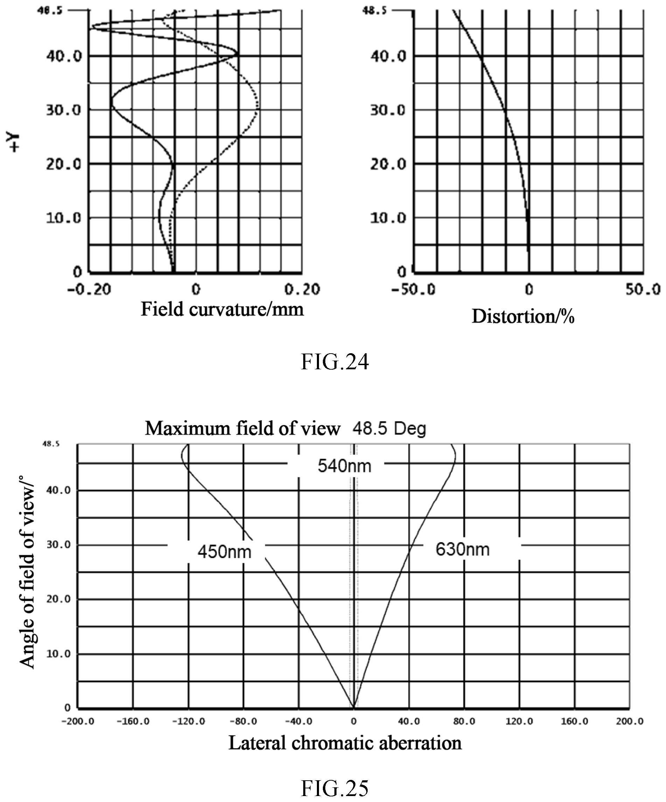

The optical performance of the near-eye optical system provided in the present fourth embodiment is shown in Figures 22 to 25: Figure 22 is a spot schematic diagram of the near-eye optical system; Figure 23 is the MTF plot of the near-eye optical system; Figure 24 is the field curvature and distortion diagram of the near-eye optical system; and Figure 25 is the lateral chromatic aberration diagram of the near-eye optical system.

The spot diagram refers to a dispersed pattern scattered in a certain range when multiple light rays emitted from one point, after passing through the near-eye optical system, is no longer converge to a single point on the image plane due to aberrations. It can be used to evaluate the imaging quality of the near-eye optical system. As shown in Figure 22, the maximum value of the image point in the spot diagram is less than 15 µm.

The MTF plot is a modulation transfer function plot, which characterizes the imaging sharpness of near-eye optical systems based on the contrast of black and white line pairs. As shown in Figure 23, the central MTF is >0.15 at 40 lp/mm, indicating clear imaging performance.

Referring to Figure 24, the maximum distortion occurs in field of view of 1, with an absolute value of less than 40%.

The lateral chromatic aberration, also known as the magnification chromatic aberration, refers to the difference between the focal positions of blue light and red light on the image plane when a polychromatic principal ray on the object side is transformed into multiple rays on the image side due to the dispersion of the refractive system. As shown in Figure 25, the maximum chromatic aberration of the near-eye optical system is less than 200 µm.

According to another embodiment of the present application, a head-mounted display device is provided.

The head-mounted display device includes a housing and the near-eye optical system as described above.

Wherein, the head-mounted display device may take the form of VR glasses or VR helmets, which is not limited in the embodiments of the present application.

The specific implementations of the head-mounted display device of the embodiments of the present application may refer to the above embodiments of the near-eye optical system, so they at least have all the beneficial effects brought by the technical solutions of the above embodiments, which will not repeated herein.

The above embodiments focus on the differences between the various embodiments, and the different optimization features between the various embodiments, as long as they do not contradict each other, may be combined to form a better embodiment, which will not be repeated herein taking into account the brevity of the text.

Although some specific embodiments of the present application have been described in detail through examples, those skilled in the art should understand that the above examples are for illustration only and are not intended to limit the scope of the present application. Those skilled in the art should understand that the above embodiments can be modified without departing from the scope and spirit of the present application. The scope of the present application is defined by the accompanying claims.

## Claims

1. A near-eye optical system, **characterized by** comprising a lens barrel (9) and a first optical element provided within the lens barrel (9);
the first optical element comprises at least a first lens (5), a polarization-reflection element (10), a phase retarder (11), and a light splitting element (12), with a light-shielding element (7) arranged annularly on one surface of the first lens (5);
the lens barrel (9) comprises a first bearing section (91), a second bearing section (92), and a transition section (93) connecting the first bearing section (91) and the second bearing section (92); the first optical element is provided within the first bearing section (91), and the transition section (93) forms a target angle θ₁ with respect to an optical axis of the near-eye optical system, wherein θ₁<90°;
the near-eye optical system satisfies: tan(θ₁)* (T₁-L₁+L₅)≤50, wherein T₁ is a total optical length of the near-eye optical system, L₁ is a distance from a surface center point O of the first lens (5) on a side provided with the light-shielding element (7) to point A, the point A is an orthogonal projection onto the optical axis of the near-eye display system of the connection point between the transition section (93) and the second bearing section (92), and L₅ is a length of the transition section (93).

2. The near-eye optical system according to claim 1, **characterized in that** the light-shielding element (7) is a light-shielding ring, and an inner edge of the light-shielding element (7) has a first sharp-angle structure (71);
the first sharp-angle structure (71) has an angle of θ₂., and abs(θ₂)≥5°.

3. The near-eye optical system according to claim 1 or 2, **characterized in that** the near-eye optical system comprises a display (1), which is connected via a bracket (2) to an end of the second bearing section (92) that is away from the transition section (93);
the light-shielding element (7) is located in an edge region on a surface of the first lens (5) that is away from the display (1).

4. The near-eye optical system according to claim 3, **characterized in that** the bracket (2) comprises a body section (21) and an extension section (22) connected to the body section (21);
wherein the extension section (22) is connected to the second bearing section (92), the body section (21) forms a set angle θ₃ with the optical axis, and θ₃<90°;
the display (1) is provided at an end of the body section (21) that is away from the extension section (22).

5. The near-eye optical system according to claim 4, **characterized in that** the near-eye optical system further comprises a second optical element, which is provided within the second support section (92) of the lens barrel (9) and located on the same optical axis as the first optical element;
the second optical element comprises at least one lens.

6. The near-eye optical system according to claim 5, **characterized in that** the second optical element comprises at least a third lens (3);
the extension section (22) of the bracket (2) is arranged annularly in an edge region on a surface of the third lens (3) close to the display (1);
a second extension section (95) is formed at a connection point between the transition section (93) and the second bearing section (92), and the second extension section (95) is arranged annularly in an edge region on a surface of the third lens (3) that is away from the display (1).

7. The near-eye optical system according to claim 6, **characterized in that** the display (1) is configured to emit natural light or circularly polarized light;
in a case where the light emitted by the display (1) is natural light, a composite film is provided on a light-emitting surface of the display (1), and the composite film comprises two phase retardation plates (15) and a polarizer (16) provided between the two phase retardation plates (15), and is capable of converting natural light into circularly polarized light.

8. The near-eye optical system according to claim 7, **characterized in that** the light splitting element (12) is provided on a surface of the first lens (5) close to the display (1);
the phase retarder (11) and the polarization-reflection element (10) are stacked on the surface of the first lens (5) that is away from the display (1).

9. The near-eye optical system according to claim 8, **characterized in that** the first optical element further comprises a polarization element (13), the polarization element (13) is stacked with the polarization-reflection element (10) and the phase retarder (11) to form a laminated element, with the polarization-reflection element (10) being located between the polarization element (13) and the phase retarder (11).

10. The near-eye optical system according to claim 6, **characterized in that** the first optical element further comprises a second lens (4), which is provided on a side of the first lens (5) opposite to the side where the light-shielding element (7) is provided;
a spacer element (8) is provided between the first lens (5) and the second lens (4), and abuts between an edge region of the first lens (5) and an edge region of the second lens (4).

11. The near-eye optical system according to claim 10, **characterized in that** a first extension section (94) is formed at the position of connection point B between the transition section (93) and the first bearing section (91), and the first extension section (94) is arranged annularly in an edge region on a surface of the second lens (4) close to the display (1).

12. The near-eye optical system according to claim 10, **characterized in that** the near-eye optical system satisfies: (L₂+L₄)/L₃≥5, where L₂ is thickness of the edge region of the first lens (5), L₄.is thickness of the edge region of the second lens (4), and L₃ is thickness of the spacer element (8).

13. The near-eye optical system according to claim 10, **characterized in that** the spacer element (8) has a ring structure, and an inner edge of the spacer element (8) is provided with a second sharp-angle structure;
the second sharp-angle structure has an angle of θ₄, and abs(θ₄)≥5°.

14. The near-eye optical system according to claim 10, **characterized in that** when the thickness L₃ of the spacer element (8) is ≤0.1 mm, the spacer element (8) is an opaque Mylar sheet.

15. The near-eye optical system according to claim 10, **characterized in that** the display (1) is configured to emit natural light or circularly polarized light;
in a case where the light emitted by the display (1) is natural light, a composite film is provided on a surface of the third lens (3) away from the display (1), and the composite film comprises two phase retardation plates (15) and a polarizer (16) provided between the two phase retardation plates (15), and is capable of converting natural light into circularly polarized light.

16. The near-eye optical system according to claim 15, **characterized in that** the light splitting element (12) is provided on the surface of the second lens (4) close to the display (1);
the phase retarder (11) and the polarization-reflection element (10) are stacked on the surface of the first lens (5) close to the display (1).

17. The near-eye optical system according to claim 16, **characterized in that** the first optical element further comprises a polarization element (13), the polarization element (13) is stacked with the polarization-reflection element (10) and the phase retarder (11) to form a laminated element, and the polarization-reflection element (10) is located between the polarization element (13) and the phase retarder (11).

18. A head-mounted display device, **characterized by** comprising:
a housing; and
the near-eye optical system according to any one of claims 1 to 17.
